# FASCICULE DE BREVET EUROPEEN

(11) **EP 1 217 058 B1**
(45) Date de publication et mention de la délivrance du brevet: **31.08.2005**
(21) Numéro de dépôt: 00870314.2
(22) Date de dépôt: 21.12.2000
(51) Int. Cl.: C09K 21/14, C08K 13/02

(54) **Composition pour protection thermique**
Wärmeschutzzusammensetzung
Thermally protective composition

(43) Date de publication de la demande: 26.06.2002
(73) Titulaire: Techspace Aero S.A., 4041 Herstal (BE)
(72) Inventeur: Tiberghien, Delphine, 1348 Louvain-La-Neuve (BE); Sastre-Gelabert, Jacques, 4860 Cornesse (BE); Devalckenaere, myriam, 59300 Famars (FR); Degee, Philippe, 7334 Hautrage (BE); Dubois, Philippe, 4260 Ciplet (BE)
(74) Mandataire: Van Malderen, Joelle

(56) Documents cités:
- EP-A- 0 274 819
- EP-A- 0 347 309
- GB-A- 1 257 656
- US-A- 3 317 455
- PATENT ABSTRACTS OF JAPAN vol. 1997, no. 05, 30 mai 1997 (1997-05-30) & JP 09 012888 A (SHIN ETSU POLYMER CO LTD), 14 janvier 1997 (1997-01-14)
- DATABASE WPI Section Ch, Week 198621 Derwent Publications Ltd., London, GB; Class A26, AN 1986-133879 XP002167335 & JP 61 069865 A (TORAY SILICONE CO LTD), 10 avril 1986 (1986-04-10)

## Description

### Objet de l'invention

La présente invention se rapporte à un nouveau matériau composite selon la revendication 1 destiné à être utilisé comme protection thermique et plus particulièrement comme barrière anti-flamme, notamment aux très hautes températures.

La présente invention se rapporte également à des utilisations possibles dudit matériau composite.

### Etat de la technique

Apparus dans les années 1950, les matériaux composites sont actuellement largement employés dans différents types d'industries. Comme leur nom l'indique, ces matériaux ont en commun d'être composés d'au moins deux matériaux ayant des propriétés différentes et dont on essaie de tirer simultanément avantage en les associant. En général, au moins un de ces matériaux est un matériau polymère et on parle alors de « matrice polymère ».

Les matériaux composites à matrice polymère sont notamment utilisés dans les domaines aéronautique et aérospatial, à la fois pour leur faible densité, pour leurs propriétés naturelles de résistance à l'oxydation à chaud et à la corrosion, ainsi que pour leurs propriétés de thermorésistance.

La recherche industrielle s'oriente actuellement vers la mise au point de matériaux composites à matrice polymère plus performants en terme de résistance aux très hautes températures. Dans le cas particulier des revêtements sur structures métalliques, ces matériaux doivent en outre être suffisamment souples pour résister à des chocs ponctuels ou à des vibrations entretenues sans s'effriter ni s'écailler.

En outre, différentes solutions ont été proposées et reposent sur l'utilisation spécifique de composés agissant par voie chimique ou par voie physique comme retardateurs de flamme.

Dans ce but, on a préparé des matériaux composites qui se présentent essentiellement sous la forme d'une matrice organique et plus particulièrement polymère, comme par exemple une matrice silicone, dans laquelle est distribuée une charge. On prépare préalablement la matrice silicone qui est une résine silicone en mettant en contact deux compositions, l'une contenant des groupes vinyliques et l'autre des liaisons Si-H. Lorsque ces deux compositions sont mises en contact en présence d'un catalyseur à base de platine, elles réticulent.

Il a ainsi été proposé d'ajouter à la matrice polymère une certaine quantité de charges minérales de taille micrométrique ayant une fonction retardatrice de flamme. Le document EP-A-0 748 778 décrit ainsi un matériau composite de céramique souple comprenant trois principaux éléments associés à un additif. Plus précisément, cette composition comprend 16 à 88% en poids d'une matrice silicone haute température, 2 à 21% de microsphères de quartz, et 1 à 15% en poids de zircone yttriée, ainsi qu'au moins un additif tel que le mica, le fluorure de calcium et/ou l'alumine.

Il a également été proposé d'incorporer des phyllosilicates précurseurs de nanocharges faisant fonction de retardateurs de flammes en créant dans le polymère une barrière aux gaz et à la chaleur. Par exemple, le document US-A-5760106 propose une composition comprenant une matrice de résine époxy dans laquelle sont incorporées des phyllosilicates qui sont plus précisément des smectites.

Les phyllosilicates sont des charges argileuses plaquettaires à haut facteur de forme et dont l'épaisseur est de l'ordre du nanomètre. Les phyllosilicates se présentent notamment sous la forme de minces feuillets et sont capables, lorsqu'ils sont introduits dans la matrice polymère, de se disperser au sein de cette matrice essentiellement selon deux modes différents. Le premier mode de dispersion est l'intercalation, ainsi dénommé parce que les chaînes polymères s'intercalent entre les plaquettes de phyllosilicates : on a alors une structure de type « sandwich » avec alternance d'une couche de polymère puis une couche de phyllosilicates. Le deuxième mode de dispersion est la délamination ou l'exfoliation. Comme le nom l'indique, les phyllosilicates sont exfoliés et dispersés au sein de la matrice. Il en résulte une dispersion moins ordonnée des nanocharges comparativement à celle obtenue selon le premier mode.

Dans le cas particulier où les phyllosilicates se présentent sous la forme de minces feuillets de silicates, ils sont souvent organomodifiés afin d'obtenir une bonne dispersion de ces phyllosilicates au sein de la matrice polymère. Pour cela, on greffe sur ces feuillets des ions ammoniums porteurs par exemple de chaînes alkyles qui vont créer de l'espace entre les feuillets. Les chaînes de la matrice polymère pourront alors occuper l'espace ainsi créé et il n'y aura pas d'agglomération des feuillets.

On connaît par ailleurs des documents US-A-4582866, US-A-3671487 et US-A-4344878 qui montrent l'intérêt d'utiliser des retardateurs de flamme halogénés afin de rendre la matrice polymère plus résistante à la combustion. Pour autant, l'avenir n'est pas dans ce type de produits, puisqu'il est à présent généralement admis que les composés halogénés ont un effet néfaste sur l'environnement.

Le document US-A-5773502 a proposé une alternative dans laquelle le matériau composite contient moins de microcharges halogénées que dans les matériaux décrits précédemment. Ces microcharges sont pour cela utilisées conjointement avec des phyllosilicates précurseurs de nanocharges. Dans ce cas, les deux types de charges, microcharges et phyllosilicates, ont un effet synergique en tant que retardateurs de flammes.

Néanmoins, aucun matériau composite souple qui ne contiendrait plus de composés halogénés mais qui garderait une aussi bonne thermorésistance et une aussi bonne souplesse n'a été jusqu'à présent proposé.
Le document EP-A-0 347 309 décrit un matériau intumescent constitué d'une résine silicone et de microcharges minérales. Ce matériau s'applique selon une épaisseur importante (10-20 mm) afin de protéger un substrat pendant 1 heure lorsqu'il est exposé à une température de flamme de 700 à 1000°C. La température du substrat reste de l'ordre de 150°C. Ce matériau n'est pas prévu pour résister à 1100°C et au-delà.
Le document EP-A-0 274 819 décrit un matériau intumescent composé d'une résine silicone chargée en billes thermoplastiques creuses remplies d'un liquide volatile afin de former une barrière de mousse lorsqu'il est exposé à une température élevée. L'objet de l'invention est de protéger un bâtiment en empêchant la propagation du feu et de fumées par les chemins de câbles et les passages de tuyaux. Ce matériau ne contient pas de nanocharges de type phyllosilicates.
Les documents JP-A-09 012 888 et JP-A-61 069865 décrivent des compositions à base de résine organopolysiloxane chargée de microcharges (silice, mica, hydroxyde d'aluminium et magnésium, etc.) et non de phyllosilicates.
Le brevet américain US-A-3 317 455 divulgue une matrice silicone chargée en fibres de titanate de postassium et en microsphères de silice.
La demande de brevet GB-A-1 257 656 propose par ailleurs un revêtement anti-feu pour résistances électriques sous forme de film en vue de leur protection lors de surcharges du circuit. L'effet retardeur de flamme est obtenu pour des températures allant jusqu'à 600°C. Ce revêtement comprend de l'orthosilicate tétraalkyl partiellement hydrolysé, de l'alumine, de la silice cristalline, un pigment inorganique tel que le dioxyde de titane et un agent de suspension tel qu'une montmorillonite alkylammonium. L'agent de suspension a pour but d'augmenter le recouvrement des particules de titane, d'augmenter la durée de vie de la composition avant emploi (pot-life) et par suite d'éviter l'écaillage du revêtement appliqué et d'augmenter sa résistance à l'humidité.

### Buts de l'invention

La présente invention vise à fournir un nouveau matériau composite qui ne présente pas les inconvénients des compositions de l'état de l'art, c'est-à-dire qui est dépourvu de composés halogénés.

En particulier, la présente invention vise à fournir un nouveau matériau composite présentant une excellente résistance mécanique aux sollicitations thermiques de longue durée, en particulier aux très hautes températures.

La présente invention vise également à fournir un nouveau matériau composite qui soit à la fois léger et très souple.

La présente invention vise également à fournir un nouveau matériau composite qui peut être utilisé comme revêtement de protection anti-flamme, en particulier pour des structures métalliques.

La présente invention vise également à fournir un nouveau matériau composite qui peut être utilisé comme moyen de protection anti-flamme ou comme moyen de protection contre les flux thermiques chauds, c'est-à-dire supérieurs à 1000°C, en particulier dans les domaines de l'aéronautique et de l'aérospatial.

### Résumé de l'invention

La présente invention se rapporte à un matériau composite selon la revendication 1.

Il est à noter que, dans la présente description, le terme « microcharges » désigne des charges dont la longueur est comprise entre 1 et 150 µm et dont l'épaisseur est de l'ordre du µm.

Le terme « nanocharges » désigne des charges dont la longueur est comprise entre 1 et 150 µm et dont l'épaisseur est de l'ordre du nm.

On entend par « facteur de forme » d'une particule le rapport de la plus grande dimension à la plus petite dimension de cette particule.

Lesdits précurseurs de nanocharges sont des phyllosilicates, tels que la montmorillonite.
C'est précisément la combinaison de phyllosilicates à des charges retardatrices de flamme plus « conventionnelles » dans une matrice silicone qui confère de manière surprenante au matériau de l'invention la propriété de pouvoir être utilisé comme revêtement de protection anti-flamme stable dans le temps (au moins 60 minutes) à de hautes températures, de préférence supérieures à 1000°C.

Les phyllosilicates sont organomodifiés par un cation ammonium porteur de chaînes alkyles.

De préférence, ledit cation ammonium porteur de chaînes alkyles est sélectionné parmi le groupe constitué par (CH₃)₂N⁺(C₈H₁₇)(C₁₈H₃₇), (CH₃)₂N⁺(C₁₈H₃₅)₂, C₆H₅CH₂N⁺(CH₃)₂(C₁₈H₃₇), et (C₁₈H₃₇)₂N⁺(CH₃)₂.

Avantageusement, les microcharges poreuses ou creuses sont des microcharges sélectionnées parmi le groupe constitué par des billes de verre, de quartz, de silicoalumnium et de zéolite.

Les microcharges minérales retardatrices de flamme non halogénées sont des microcharges sélectionnées parmi le groupe constitué par Al₂O₃, le mica, le borate de zinc hydraté, le trihydrate d'aluminium ou un mélange de ceux-ci.

De préférence, la taille des microcharges poreuses ou creuses est comprise entre 1 et 150 µm.

De préférence, la taille des microcharges minérales retardatrices de flamme non halogénées est comprise entre 1 et 100 µm.

Avantageusement, les nanocharges dérivées des précurseurs de nanocharges retardatrices de flamme sont des nanocharges de l'ordre de 1 nm d'épaisseur ayant un facteur de forme compris entre 100 et 1000.

La présente invention se rapporte également à l'utilisation du matériau composite selon la présente invention comme moyen de protection anti-flamme ou de protection contre les flux thermiques chauds, c'est-à-dire d'une température supérieure à 1000°C.

Le matériau composite selon la présente invention peut être comme revêtement de structures, de préférence de structures métalliques.

De manière avantageuse, le matériau selon la présente invention est utilisé dans l'aéronautique et/ou l'aérospatiale.

La présente invention se rapporte également à une pièce métallique, recouverte par un revêtement comprenant le matériau composite selon la présente invention.

Par rapport aux matériaux composites de l'état de l'art, notamment par rapport à celui décrit dans le brevet EP-A-0748778, le matériau composite selon la présente invention offre plusieurs avantages.

Parmi ces avantages, il y a la capacité du matériau à résister à la fois à la flamme donc à l'incendie et à des flux thermiques chauds.

En particulier, le matériau présente l'avantage de satisfaire aux exigences de la norme ISO 2685 (classe à l'épreuve du feu), c'est-à-dire qu'il est capable de résister à des températures supérieures à 1100°C contrairement à certains matériaux intumescents ou anti-feu proposés dans l'état de la technique (EP-A-0 347 309, EP-A-0 274 819, US-A-3,317,455, GB-A-1 257 656).

Comparativement aux matériaux de l'état de l'art, le matériau selon la présente invention, utilisé en tant que revêtement, résiste mieux aux sollicitations thermiques de longue durée.

En outre, durant l'exposition aux hautes températures, le matériau composite présente une meilleure adhérence au support qu'il recouvre, même si cette adhérence reste faible puisqu'elle est typiquement comprise entre 0.3 et 1 MPa.

De ce fait, il est possible de diminuer l'épaisseur du revêtement ou celle du support.

Il en découle que les perspectives quant aux modes d'application d'un tel revêtement sont élargies.

Un autre avantage est que le matériau composite est dépourvu d'éléments nocifs pour l'environnement tels que Cr, V, Br, Cl, Pb, CFC, dioxines.

De plus, en cas de combustion, les fumées dégagées par le matériau composite ne sont pas toxiques.

Un autre avantage est l'autoextinguibilité du matériau.

### Brève description des figures

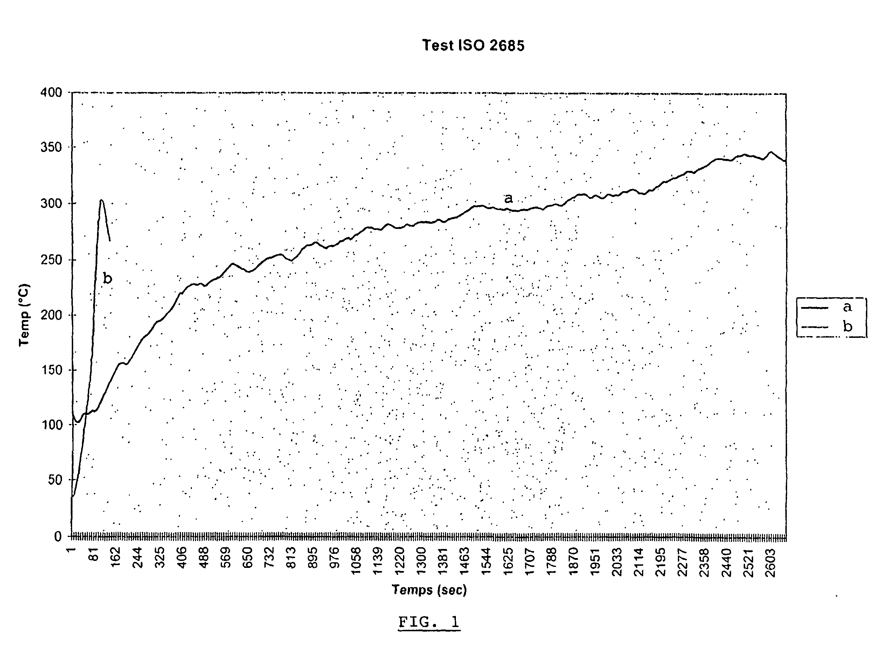

La figure 1 présente conjointement le résultats de résistance anti-flamme d'une plaque d'aluminium qui, dans un cas, est revêtue d'un matériau composite selon la présente invention et, dans un autre cas, n'est pas revêtue d'un tel matériau.

### Description d'une forme d'exécution préférée de l'invention

Selon une forme préférée de l'invention, le matériau composite est obtenu par mélange de quantités pondérales éventuellement équivalentes de deux constituants A et B.

Plus précisément, le constituant A comprend:
- un polysiloxane de type diméthylpoly-(méthylhydrogène)diméthylsiloxane, et
- 1,5% en poids d'inhibiteur de réticulation.

Par ailleurs, le constituant B comprend :
- un polysiloxane porteur de groupes vinyles, et
- 0,3% en poids de catalyseur à base de platine,

Selon l'exemple d'exécution préféré, on a ajouté de préférence de manière équivalente dans chacun des constituants :
- 10% en poids d'un précurseur de charge nanométrique, de préférence de la montmorillonite organomodifiée par des ions ammonium de diméthyl(2-éthylhexyl) suif hydrogéné,
- 20% en poids de microcharges minérales retardatrices de flamme non halogénées, par exemple de borate de zinc hydraté, et
- 7,2% en poids de microcharges poreuses ou creuses constituées par exemple de billes de verre, de quartz, de silicoaluminium ou de zéolite.

Selon une autre forme d'exécution, on peut ajouter la totalité des charges dans l'un ou l'autre des deux constituants avant le mélange.

Selon une dernière forme d'exécution, on ajoute au moment du mélange les microcharges.

Le mélange des constituants A et B est appliqué en revêtement de 6 mm d'épaisseur par injection sur une plaque d'aluminium de même épaisseur préalablement recouverte d'une fine couche de primaire.

La capacité de résistance à la flamme de ce revêtement a été testée à l'aide d'un brûleur dont la température de flamme est de 1100 °C ± 80 °C et dont la puissance de chauffe est de 116 kW/m² ± 10 kW/m². La plaque recouverte du revêtement a été disposée à 7 cm au-dessus du brûleur. Ce test a duré plus de 60 minutes sans qu'aucun morceau du revêtement ne se soit détaché. La température de la plaque, mesurée en son centre, grâce à un thermocouple placé côté de l'aluminium vierge ne dépassait pas 300 °C. A l'issue du test, la plaque d'aluminium protégée par ce matériau composite était parfaitement intacte et le revêtement adhérait encore à la plaque.

Pour comparaison, la même plaque d'aluminium, dépourvue de ce revêtement, a été exposée à la flamme et il a été observé que sa durée de vie n'excédait pas deux minutes, puis la plaque a fini par être percée par la flamme.

La figure 1 présente les résultats obtenus pour ce test. Elle montre conjointement l'évolution en fonction du temps de la température mesurée au centre de la plaque d'aluminium, selon que ladite plaque est recouverte (courbe a) ou non recouverte (courbe b) du matériau composite selon la présente invention. Dans le cas où la plaque n'est pas recouverte par le matériau composite, la température de la plaque augmente de plusieurs centaines de degrés en quelques minutes d'exposition à la flamme (moins de dix minutes), tandis que la température n'augmente que d'environ 150 °C dans les premières minutes d'exposition à flamme pour être ensuite quasiment constante.

### Exemples complémentaires

Des études ont montré que la nature des précurseurs de phyllosilicates, plus précisément la nature de la charge et celle de l'ion organomodifiant ont une influence sur la capacité à résister à la flamme du composite finalement obtenu. Le tableau 1 donne des exemples de phyllosilicates qui confèrent au matériau une résistance à la flamme particulièrement élevée:

**Tableau 1**

| **Nom commercial du précurseur** | **Nature de la charge** | **Nature de l'ion organomodifiant** |
|---|---|---|
| Cloisite 25A | montmorillonite | (CH₃)₂N⁺(C₈H₁₇)(C₁₈H₃₇) |
| EXM 803 | montmorillonite | (CH₃)₂N⁺(C₁₈H₃₅)₂ |
| EX 0032 | Montmorillonite | C₆H₅CH₂N⁺(CH₃)₂(C₁₈H₃₇) |

Une montmorillonite alkylammonium a été utilisée dans l'état de la technique (GB-A-1 257 656) non comme charge retardatrice de flamme additionnelle mais comme agent de suspension dans une composition retardatrice de flamme dans le but d'éviter l'écaillage du revêtement appliqué et d'augmenter la résistance à l'humidité (application électrique, T<600°C).

## Revendications

1. Matériau composite de protection anti-flamme, **caractérisé en ce qu'**il est obtenu à partir du mélange d'au moins :
- 20 à 90% en poids d'une matrice silicone haute température,
- 1 à 20% en poids de microcharges poreuses ou creuses,
- 1 à 30% en poids de microcharges minérales retardatrices de flamme non halogénées sélectionnées parmi le groupe constitué par Al₂O₃, le mica, le borate de zinc hydraté, le trihydrate d'aluminium ou un mélange de ceux-ci et
- 1 à 30% de phyllosilicates organomodifiés par un cation ammonium, porteur de chaînes alkyles, faisant office de précurseurs de nanocharges retardatrices de flamme qui, lors de l'incorporation dans la matrice silicone, se dispersent dans celle-ci sous forme de nanocharges essentiellement par intercalation et/ou exfoliation, lesdits cations ammonium porteurs de chaînes alkyles créant entre les feuillets de silicates des espaces susceptible d'être occupés par les chaînes de polymère silicone.

2. Matériau composite selon la revendication 1, **caractérisé en ce que** ledit cation ammonium porteur de chaînes alkyles est sélectionné parmi le groupe constitué par (CH₃)₂N⁺(C₈H₁₇)(C₁₈H₃₇), (CH₃)₂N⁺(C₁₈H₃₅)₂, C₆H₅CH₂N⁺(CH₃)₂(C₁₈H₃₇) et (C₁₈H₃₇)₂N⁺(CH₃)₂.

3. Matériau composite selon la revendication 1 ou 2, **caractérisé en ce que** les microcharges poreuses ou creuses sont des microcharges sélectionnées parmi le groupe constitué par des billes de verre, de quartz, de silicoaluminium et de zéolite.

4. Matériau composite selon l'une des revendications précédentes, **caractérisé en ce que** la taille des microcharges poreuses ou creuses est comprise entre 1 et 150 µm.

5. Matériau composite selon l'une des revendications précédentes, **caractérisé en ce que** la taille des microcharges minérales retardatrices de flamme non halogénées est comprise entre 1 et 100 µm.

6. Matériau composite selon l'une des revendications précédentes, **caractérisé en ce que** les nanocharges dérivées des précurseurs de nanocharges retardatrices de flamme sont des nanocharges de l'ordre de 1 nm d'épaisseur ayant un facteur de forme compris entre 100 et 1000.

7. Matériau composite selon l'une quelconque des revendications 1 à 6, **caractérisé en ce qu'**il est obtenu par mélange de quantités pondérales éventuellement équivalentes d'un premier constituant (A) comprenant un polysiloxane de type diméthylpoly-(méthylhydrogène)diméthylsiloxane et 1,5% en poids d'inhibiteur de réticulation et d'un deuxième constituant (B) comprenant un polysiloxane porteur de groupes vinyles et 0,3% en poids de catalyseur à base de platine.

8. Matériau composite selon la revendication 7, **caractérisé en ce qu'**il est obtenu en ajoutant dans chacun desdits constituants (A, B), de préférence de manière équivalente, ou exclusivement dans l'un ou l'autre des constituants (A, B) :
- 10% en poids d'un précurseur de charge nanométrique, de préférence de la montmorillonite organomodifiée par des ions ammonium de diméthyl(2-éthylhexyl) suif hydrogéné,
- 20% en poids de microcharges minérales retardatrices de flamme non halogénées, tel que le borate de zinc hydraté,
- 7,2% en poids de microcharges poreuses ou creuses telles que des billes de verre, de quartz, de silicoaluminium ou de zéolite.

9. Pièce métallique, **caractérisée en ce qu'**elle est recouverte par un revêtement injecté comprenant le matériau composite selon l'une des revendications 1 à 8.

10. Utilisation du matériau composite selon l'une des revendications 1 à 8 comme moyen de protection anti-flamme ou de protection contre les flux thermiques chauds dans l'aéronautique et/ou l'aérospatiale, satisfaisant à la norme ISO 2685, essentiellement la tenue pendant 15 minutes à une flamme normalisée, à savoir de température égale à (1100 ± 80)°C et de densité de flux thermique égale à (116 ± 10)kW/m².

11. Utilisation du matériau composite selon la revendication 7 comme revêtement de structures, de préférence de structures métalliques.

## Patentansprüche

1. Verbundwerkstoff zum Flammschutz, **dadurch gekennzeichnet, dass** er erhalten wird aus einer Mischung von mindestens:
- 20 bis 90 Gew.-% einer Hochtemperatur-Silikonmatrix,
- 1 bis 20 Gew.-% poröse oder hohle Mikrofüllstoffe,
- 1 bis 30 Gew.-% feuerhemmende, nicht halogenhaltige mineralische Mikrofüllstoffe, die aus der Gruppe ausgewählt wurden, die von Al₂O₃, Glimmer, hydratisiertem Zinkborat, Aluminiumtrihydrat oder einer Mischung dieser Stoffe gebildet wird, und
- 1 bis 30 % durch ein Ammoniumkation, Träger von Alkylketten, organomodifizierte Phyllosilikate, die als Zwischenstoffe von feuerhemmenden Nanofüllstoffen dienen, die sich bei Zumischen zur Silikonmatrix in dieser in Form von Nanofüllstoffen im Wesentlichen durch Einfügung und/oder Ablösung verteilen, wobei die Ammoniumkationen, Träger von Alkylketten, zwischen den Silikatplättchen Zwischenräume schaffen, die geeignet sind, um von den Silikonpolymerketten besetzt zu werden.

2. Verbundwerkstoff gemäß Anspruch 1, **dadurch gekennzeichnet, dass** das Ammoniumkation, Träger von Alkylketten, aus der Gruppe ausgewählt wurde, die von (CH₃)₂N⁺(C₈H₁₇)(C₁₈H₃₇), (CH₃)₂N⁺(C₁₈H₃₅)₂, C₆H₅CH₂N⁺(CH₃)₂(C₁₈H₃₇) und (C₁₈H₃₇)₂N⁺(CH₃)₂ gebildet wird.

3. Verbundwerkstoff gemäß Anspruch 1 oder 2, **dadurch gekennzeichnet, dass** es sich bei den porösen oder hohlen Mikrofüllstoffen um Mikrofüllstoffe handelt, die aus der Gruppe ausgewählt wurden, die von Glas-, Quarz-, Silicoaluminium- und Zeolithkugeln gebildet wird.

4. Verbundwerkstoff gemäß einem der vorherigen Ansprüche, **dadurch gekennzeichnet, dass** die Größe der porösen oder hohlen Mikrofüllstoffe zwischen 1 und 150 µm beträgt.

5. Verbundwerkstoff gemäß einem der vorherigen Ansprüche, **dadurch gekennzeichnet, dass** die Größe der feuerhemmenden, nicht halogenhaltigen mineralischen Mikrofüllstoffe zwischen 1 und 100 µm beträgt.

6. Verbundwerkstoff gemäß einem der vorherigen Ansprüche, **dadurch gekennzeichnet, dass** es sich bei den Nanofüllstoffen, die von den Zwischenstoffen der feuerhemmenden Nanofüllstoffe abgeleiten werden, um Nanofüllstoffe von 1 nm Stärke mit einem Formfaktor zwischen 100 und 1000 handelt.

7. Verbundwerkstoff gemäß einem der Ansprüche 1 bis 6, **dadurch gekennzeichnet, dass** er erhalten wird durch die Mischung von gewichtsanalytischen Mengen, die möglicherweise gleichwertig sind, einer ersten Komponente (A), die ein Polysiloxan vom Typ Dimethylpoly(methylhydrogen)dimethylsiloxan und 1,5 Gew.-% Vernetzungshemmstoff enthält, und einer zweiten Komponente (B), die ein Polysiloxan, Träger von Vinylgruppen, und 0,3 Gew.-% Katalysator auf Platinbasis enthält.

8. Verbundwerkstoff gemäß Anspruch 7, **dadurch gekennzeichnet, dass** er erhalten wird, indem jeder der Komponenten (A, B), vorzugsweise in gleichen Verhältnissen, oder ausschließlich einer der Komponenten (A, B):
- 10 Gew.-% Zwischenstoff aus nanometrischem Füllstoff, vorzugsweise von dem durch die hydrogenisierten Dimethylammoniumionen (2-Ethylhexyl) organomodifizierten Montmorillonit,
- 20 Gew.-% feuerhemmende, nicht halogenhaltige mineralische Mikrofüllstoffe, wie das hydratisierte Zinkborat,
- 7,2 Gew.-% poröse oder hohle Mikrofüllstoffe wie die Glas-, Quarz-, Silicoaluminium- und Zeolithkugeln hinzugefügt wird.

9. Metallteil, **dadurch gekennzeichnet, dass** es mit einer eingespritzten Beschichtung bedeckt ist, die den Verbundwerkstoff gemäß einem der Ansprüche 1 bis 8 enthält.

10. Verwendung des Verbundwerkstoffes gemäß einem der Ansprüche 1 bis 8 als Flammenschutzmittel oder als Schutzmittel gegen den Wärmefluss in der Luftfahrt und/oder in der Raumfahrt, in Übereinstimmung mit der ISO-Norm 2685, insbesondere die Beständigkeit für eine Dauer von 15 Minuten gegenüber einer normmäßigen Flamme, d.h. einer Temperatur von (1100 ± 80) °C und einer Wärmeflussdichte von (116 ± 10) kW/m².

11. Verwendung des Verbundwerkstoffes gemäß Anspruch 7 als Beschichtung von Strukturen, vorzugsweise Metallstrukturen.

## Claims

1. Composite material for anti-flame protection, **characterised in that** it is obtained from the mixture of at least:
- 20 to 90% by weight of a high-temperature silicon matrix,
- 1 to 20% by weight of porous or hollow microcharges,
- 1 to 30% by weight of non-halogenated flame-retardant mineral microcharges, selected from the group consisting of Al₂O₃, mica, hydrated zinc borate, aluminum trihydrate or a mixture thereof, and
- 1 to 30% of phyllosilicates organomodified by an ammonium cation carrying alkyl chains serving as precursors of flame-retardant nanocharges which, when incorporated into the silicon matrix, disperse in the latter in the form of nanocharges essentially by intercalation and/or exfoliation, said ammonium cations carrying alkyl chains creating between the silicate sheets spaces that can be occupied by the chains of silicon polymer.

2. Composite material according to Claim 1, **characterised in that** said ammonium cation carrying alkyl chains is selected from the group consisting of (CH₃)₂N⁺(C₈H₁₇)(C₁₈H₃₇), (CH₃)₂N⁺(C₁₈H₃₅)₂, C₆H₅CH₂N⁺(CH₃)₂(C₁₈H₃₇) and (C₁₈H₃₇)₂N⁺(CH₃)₂.

3. Composite material according to Claim 1 or 2, **characterised in that** the porous or hollow microcharges are microcharges selected from the group consisting of glass, quartz, silicoaluminum and zeolite balls.

4. Composite material according to one of the preceding claims, **characterised in that** the size of the porous or hollow microcharges is between 1 and 150 µm.

5. Composite material according to one of the preceding claims, **characterised in that** the size of the non-halogenated flame-retardant mineral microcharges is between 1 and 100 µm.

6. Composite material according to one of the preceding claims, **characterised in that** the nanocharges derived from the precursors of the flame-retardant nanocharges are nanocharges of the order of 1 nm in thickness with a shape factor between 100 and 1,000.

7. Composite material according to any one of Claims 1 to 6, **characterised in that** it is obtained by mixing possibly equivalent weight quantities of a first component (A) comprising a polysiloxane of the dimethylpoly(methylhydrogen)dimethylsiloxane type and 1.5% by weight of reticulation inhibitor and a second component (B) comprising a polysiloxane carrying vinyl groups and 0.3% by weight of platinum-based catalyst.

8. Composite material according to Claim 7, **characterised in that** it is obtained by adding to each of said components (A, B), preferably equally or exclusively to one or the other component (A, B):
- 10% by weight of a precursor of nanometric charge, preferably montmorillonite organomodified by ammonium ions of dimethyl(2-ethylhexyl)hydrogenated tallow,
- 20% by weight of non-halogenated flame-retardant mineral microcharges such as hydrated zinc borate,
- 7.2% by weight of porous or hollow microcharges such as glass, quartz, silicoaluminum or zeolite balls.

9. Metal part **characterised in that** it is coated by an injected coating comprising the composite material according to one of Claims 1 to 8.

10. Use of the composite material according to one of Claims 1 to 8 as a means of anti-flame protection or protection against heat flux in aeronautics and/or aerospace meeting the requirements of the ISO 2685 standard, essentially resistance for 15 minutes to a standardised flame, namely at a temperature of (1,100 ± 80) °C and with a density of heat flux of (116 ± 10) kW/m².

11. Use of the composite material according to Claim 7 as a coating for structures, preferably metal structures.
